# EUROPEAN PATENT APPLICATION

(11) **EP 1 732 233 A1**
(43) Date of publication of application: **13.12.2006**
(21) Application number: 05727897.0
(22) Date of filing: 29.03.2005
(51) Int. Cl.: H04B 1/10, H04B 14/04

(54) **SOUND SIGNAL PROCESSING DEVICE**

(30) Priority: 31.03.2004 JP 2004107284
(71) Applicant: Pioneer Corporation, Tokyo 153-8654 (JP)
(72) Inventor: WAKIMOTO, Hiroshi, Kawagoe koujou, Pioneer Corp., Kawagoe-shi, Saitama 3508555 (JP)
(74) Representative: Popp, Eugen
(86) International application number: PCT/JP2005/005949
(87) International publication number: WO 2005/096512

(57) **Abstract**

It is an object of the present invention to provide an audio signal processing apparatus for generating an audio signal capable of alleviating a user's sense of incongruity.

The audio signal processing apparatus comprises an audio processing unit 2 and a control unit 3. The audio processing unit 2 is provided for processing an audio signal Sau outputted from a receiving unit Rx which receives a signal transmitted through a digital transmission route. The control unit 3 is provided for judging a reception state in accordance with a plurality of internal states Ddet of the receiving unit Rx, controlling signal processing contents to be executed by the audio processing unit 2 in accordance with a result of the judging. In this way, it is possible to generate from an audio signal Sau an audio signal Scmp capable of alleviating a user's sense of incongruity even if a reception state has become worse.

## Description

### Technical Field

The present invention relates to an audio signal processing apparatus for processing an audio signal received for example through a digital transmission system.

### Background Technique

In recent years, various sorts of information are multiplexed and transmitted through a digital transmission system such as a digital television broadcast, a digital radio broadcast, and the Internet or the like.

In these digital transmission systems, various data such as audio and video data are compressed/coded, then subjected to a processing such as an error correction coding and an interleave or the like, followed by being modulated through an OFDM modulation or the like and then transmitted through a multiplex transmission, thereby enabling a receiving apparatus to demodulate the received data into various high quality data such as audio and video data.

Thus, by making use of the advantages of the above-mentioned digital transmission systems to distribute a high quality music or the like, and allowing a receiving apparatus to perform a reception, a demodulation and a playback based on an audio system, it is possible to provide a user with a high quality music.

However, a reception state of a receiving apparatus depends on an environment of a digital transmission route. For example, there is a possibility that a mobile body radio transmission route will become deteriorated due to an influence of a fading or the like. For this reason, it is important to effectively remove an influence of an environmental change of a digital transmission route on the receiving apparatus side.

To solve the above problem, an improved broadcast receiving apparatus is disclosed by Japanese Unexamined Patent Application Publication No. 2002-300061, in which a reception state of a coming broadcast wave is detected in accordance with a bit error rate (BER) obtained during a demodulation. When a reception state changes from a good state to a worse state due to a fading or the like, an output level of a received audio signal is reduced to a mute level. On the other hand, when the reception state has been restored to a good state, the output level is gradually returned to its original state, so as to reduce a noise mixed in the audio signal due to a fading or the like, thereby alleviating a sense of incongruity exerted on a user.

Patent Document 1: Japanese Unexamined Patent Application Publication No. 2002-300061.

### Disclosure of the Invention

### Problem(s) to be Solved by the Invention

However, the above-mentioned conventional broadcast receiving apparatus detects a quality of a reception state only in accordance with a bit error rate, and reduces a noise component of an audio signal only by performing a mute control in accordance with a detection result.

As a result, although a reception state is detected with an acceptable accuracy, there has been a problem that it is difficult to perform a high quality audio playback in response to an actual reception state if merely a mute control is performed to remove a noise mixed in an audio signal.

The present invention has been accomplished in view of the conventional problem, and it is an object of the present invention to provide an improved audio signal processing apparatus capable of performing a high quality audio playback in accordance with an audio signal received through a digital transmission system.

### Means for Solving the Problem

An invention recited in claim 1 is an audio signal processing apparatus for processing an audio signal outputted from receiving means which is provided for receiving a signal transmitted hereto through a digital transmission route, the apparatus comprising: audio processing means for processing the audio signal; and control means for judging a reception state using a plurality of information indicating an internal state of the receiving means, and controlling signal processing contents to be executed by the audio processing means in accordance with a result of the judging.

An invention recited in claim 13 is an audio signal processing method for processing an audio signal outputted from receiving means which is provided for receiving a signal transmitted hereto through a digital transmission route, the method comprising: a reception state judging step for judging a reception state using a plurality of information indicating internal state of the receiving means; a processing contents setting step for setting processing contents of the audio signal in accordance with a judgment result based on the reception state judging step; and a signal processing step for processing the audio signal in accordance with the processing contents set by the processing contents setting step.

An invention recited in claim 14 is a computer program for a computer to execute, which computer is provided for processing an audio signal outputted from receiving means provided for receiving a signal transmitted hereto through a digital transmission route, the program comprising: a reception state judging step for judging a reception state using a plurality of information indicating internal state of the receiving means; a processing contents setting step for setting processing contents of the audio signal in accordance with a judgment result based on the reception state judging step; and a signal processing step for processing the audio signal in accordance with the processing contents set by the processing contents setting step.

An invention recited in claim 15 is a recording medium having recorded therein a computer program recited in claim 14.

### Brief Description of the Drawings

Fig. 1 provides views showing a structure and functions of an audio signal processing apparatus according to an embodiment of the present invention.
Fig. 2 is a block diagram showing a structure of an audio signal processing apparatus according to an embodiment.
Fig. 3 provides views showing a structure and functions of an audio signal amount detecting unit 6c provided in a decoding unit.
Fig. 4 is a block diagram showing a structure of an audio processing unit provided in the audio signal processing apparatus shown in Fig. 2.
Fig. 5 is a block diagram showing a structure of a control unit provided in the audio signal processing apparatus shown in Fig. 2.
Fig. 6 provides graphs explaining functions of a reception state aggravation period detecting unit and a reception state aggravation interval detecting unit shown in Fig. 5.
Fig. 7 provides charts schematically showing control data stored in a table shown in Fig. 5.
Fig. 8 is a flow chart explaining an operation of the audio signal processing apparatus shown in Fig. 2.
Fig. 9 is a flow chart explaining a further operation of the audio signal processing apparatus shown in Fig. 2.

### Best Mode of Carrying Out the Invention

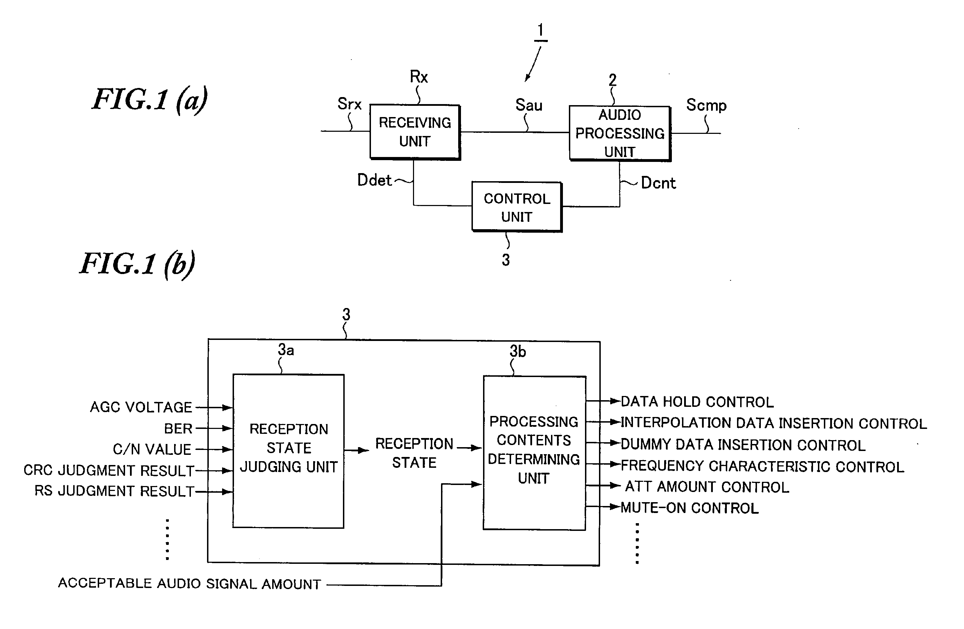

Next, description will be given to explain an audio signal processing apparatus formed according to an embodiment of the present invention, with reference to Fig. 1.

Fig. 1(a) is a block diagram showing a structure of an audio signal processing apparatus, Fig. 1(b) is another block diagram showing functions of the audio signal processing apparatus.

As shown in Fig. 1(a), the audio signal processing apparatus 1 is equipped with an audio processing unit 2 and a control unit 3. The audio processing unit 2 operates under the control of the control unit 3, to process an audio signal Sau outputted from a receiving unit Rx which receives a multiplexed signal transmitted through a digital transmission route such as a digital radio broadcast, a digital television broadcast, the Internet or the like.

Once the receiving unit Rx receives the afore-mentioneddigital radio broadcast or the like, the multiplexed reception signal will be high-frequency amplified and frequency-converted. The frequency-converted signal is demodulated and then subjected to a decoding processing such as information separating and decoding, thereby returning the signal to an original audio signal Sau which usually exist before being modulated and multiplexed on a broadcast station side. Furthermore, the receiving unit Rx operates to temporarily buffer the generated audio signal Sau in a buffer memory (not shown) or the like and then output the same, thereby adjusting the operation timings of the receiving unit Rx and the audio signal processing unit 2.

The control unit 3 detects an internal state of the receiving unit Rx, judges a reception state based on the detection result and determines the processing contents of the audio processing unit 2 based on the judgment result, and controls the audio processing unit 2 according to the determined contents.

In more detail, the control unit 3 is equipped with a reception state judging unit 3a and a processing contents determining unit 3b as shown in Fig. 1(b).

The reception state judging unit 3a receives: CRC judgment result based on AGC voltage generated when the receiving unit Rx performs an AGC control, a bit error rate (BER), a C/N rate, and a CRC (Cyclic Redundancy Check); and an RS judgment result based on a lead solomon error judging processing. These parameters are inputted as internal state signals indicating the internal state of the receiving unit Rx. Then, based on these parameters, it is possible to judge various reception states, such as a stable reception state not involving a field intensity reduction and a multi-pass fading, a reception state affected by a multi-pass fading or the like, a weak field reception state in which a reception field intensity has been reduced.

The processing contents determining unit 3b receives, by incorporating in an internal state signal Ddet, a change in an amount of an audio signal of a time when a reception state buffered during a predetermined time is acceptable, which audio signal is among the audio signal Sau which the receiving unit Rx buffers in the above-mentioned buffer memory. Then, in accordance with an amount of an audio signal (hereinafter, referred to as "audio signal amount") of a time when the reception state is good, a change of reception state during a predetermined period is analyzed. Afterwards, in response to the analysis result and a reception state judged by the reception state judging unit 3a, the contents to be processed by the audio processing unit 2 is determined, followed by outputting a control signal Scnt for operating the processing contents determining unit 3b in accordance with the determined contents.

When the audio processing unit 2 processes the audio signal Sau and effects an audio playback through a speaker (not shown) in accordance with a control signal Scnt supplied from the control unit 3, it is possible to generate and thus output an audio signal Scmp for playing back a high quality sound in response to an actual reception state.

In more detail, the audio processing unit 2 has a function capable of performing various processing on an audio signal Sau in accordance with a control signal Scnt outputted from the processing contents determining unit 3b shown in Fig. 1 (b). The audio processing unit 2 further has a data hold control function for interpolating a signal component missing from the audio signal Sau by repeating the audio signal Sau of a predetermined period; an interpolation data insertion control function for interpolating a signal component missing from the audio signal Sau; a dummy data insertion control function for inserting in an audio signal Sau a dummy data component which is used for reproducing a non-jarring sound when audio playback is performed through a speaker; a frequency characteristic control function for adjusting a frequency characteristic by means of a variable filter; an ATT amount control function for adjusting an attenuation amount by means of an attenuator; a mute-On control function for intercepting an output of an audio signal Sau; a non-operation control function for not performing any operation when an audio signal Sau is at its high quality. In this way, various control functions are carried out and an audio signal Sau is processed in accordance with an instruction of the control signal Scnt of the control unit 3, thereby generating and thus outputting an audio signal Scmp for playing back a high quality sound in response to an actual reception state.

According to the audio signal processing apparatus 1 of the present embodiment having the above-described structure, upon detecting a reception state in accordance with a plurality of internal states in the receiving unit Rx, it is possible to judge a reception state with an acceptable precision. Further, if, in response to a judged reception state, a processing for playing back a high quality sound through a speaker or the like is performed on an audio signal Sau outputted from the receiving unit Rx, it is possible to perform an audio playback through a speaker or the like even when a reception state has become worse, without giving a user a sense of an incongruity.

On the other hand, it is also possible to form the reception state judging unit 3a and contents determining unit 3b shown in Fig. 1(b), using a storage unit in the form of look-up table. In addition, it is possible for the control unit 3 to be formed by a circuit having an operational function as well as a judgment function of a microprocessor (MPU) or the like, thereby allowing the microprocessor to judge a reception state and determine processing contents.

### [Example]

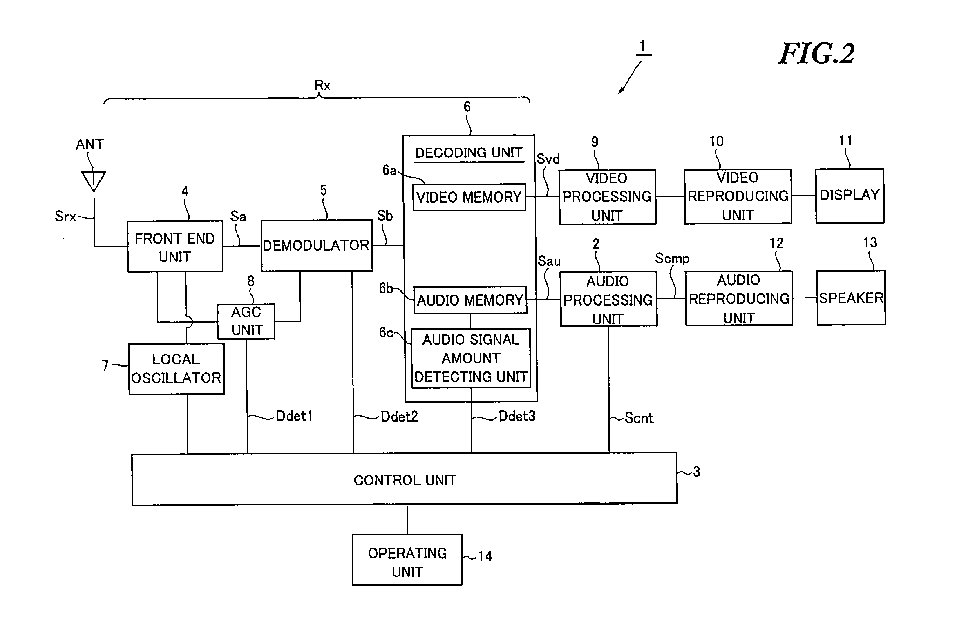

Next, description will be given to explain some more detailed embodiments of the audio signal processing apparatus, with reference to Figs. 2 to 9. Fig. 2 is a block diagram showing a structure of the audio signal processing apparatus according to the present embodiment, but using the same reference numerals to represent the same or corresponding portions of Fig. 1(a).

As shown in Fig. 2, the audio signal processing apparatus 1 has an audio processing unit 2 and a control unit 3. The audio processing unit 2, in accordance with a control signal fed from the control unit 3, processes an audio signal Sau outputted from the receiving unit Rx which receives a multiplexed signal transmitted through a digital radio broadcast, a digital television broadcast, the Internet or the like, and generates and thus outputs an audio signal Scmp for driving respective speakers 13 which constitute a multi-channel speaker system.

The receiving unit Rx has a front end unit 4 connected with an antenna ANT, a demodulator 5, a decoder 6, a local oscillator 7, an AGC unit 8 and the like.

The front end unit 4 RF-amplifies a reception signal Srx generated in an antenna ANT, mixes it with a local oscillation signal supplied from the local oscillator 7, so as to generate a modulation signal having an intermediate frequency. The modulation signal is then amplified and A/D converted, thereby outputting a modulation signal Sa consisting of digital data train.

The AGC unit 8 automatically adjusts an amplification rate to be used by the front end unit 4 for amplifying a modulation signal having an intermediate frequency. Namely, the AGC unit 8 adjusts an AGC voltage in accordance with a bit error rate (BER) detected by the demodulator 5, and applies an AGC voltage to the front end unit 4, thereby effecting an automatic adjustment of the amplification rate. Furthermore, the AGC unit 8 supplies an internal state signal Ddet1 indicating an AGC voltage to the control unit 3.

The demodulator 5 performs an error correction processing on the modulation signal Sa to effect a demodulation, thereby generating and thus outputting a demodulation signal Sb.

Furthermore, the demodulator 5 supplies, to the control unit 3, an internal state signal Ddet2 indicating various parameters such as a bit error rate (BER) detected when performing an error correction processing, C/N-value, CRC judgment result, RS judgment result based on a lead solomon error judging processing, an amount of audio signal and the like.

The decoding unit 6 separates, into respective independent information, audio signal and video signal as well as various other data compressed/coded and multiplexed by the demodulation signal Sb, and performs an expansion processing on the separated audio signal and video signal as well as various other data, thereby restoring the data into original audio signal Sau, video signal Svd, and various other data which usually exist before being modulated and multiplexed on broadcast station side.

Then, a video processing unit 9 generates a composite signal or the like in accordance with a video signal Svd outputted from the decoding unit 6, while a video reproducing unit 10 drives/controls a display unit 4 in accordance with the composite signal, thereby displaying pictures transmitted from a broadcast station or the like.

Moreover, the audio processing unit 2 performs a below-mentioned signal processing on the audio signal Sau outputted from the decoding unit 6, to generate an audio signal Scmp corrected in response to a reception state, while the audio reproducing unit 12 performs D/A conversion and power amplification on the audio signal Scmp and supplies the processed signal to a speaker 13, thereby reproducing a sound such as music transmitted from a broadcast station or the like.

Furthermore, the decoding unit 6 contains a video memory 6a and an audio memory 6b serving as buffer memories for buffering a video signal Svd and an audio signal Sau so as to adjust timings, and supplying the signals to the video processing unit 9 and the signal processing unit 2. The decoding unit 6 further contains an audio signal amount detecting unit 6c which detects, among audio signals Sau buffered by the audio memory 6b, an audio signal amount change of a time when a reception state is good, and outputs the detected audio signal amount as an internal state signal Ddet3.

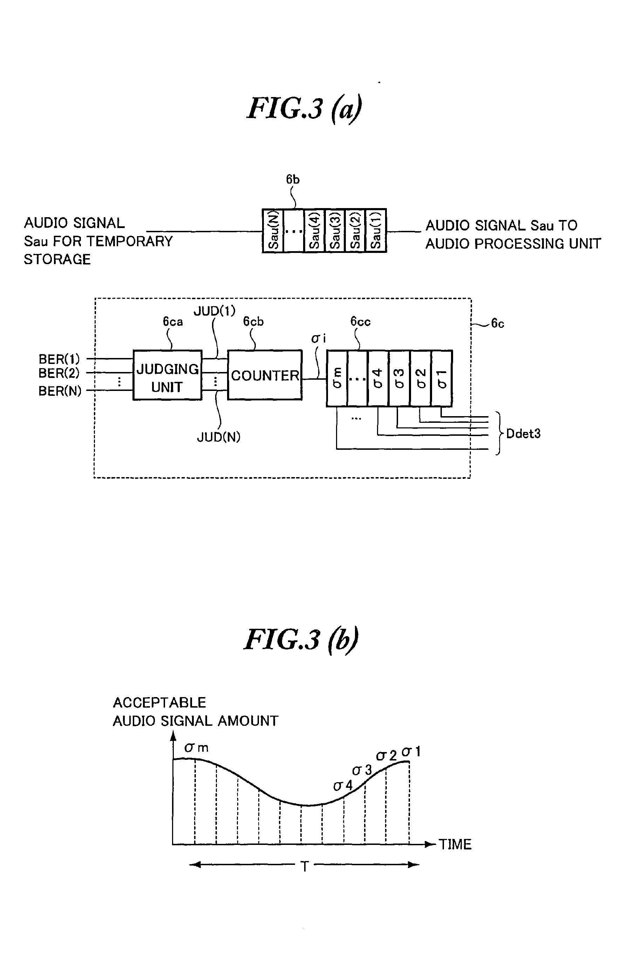

Fig. 3 (a) is a block diagram showing a structure of the audio signal amount detecting unit 6c, and Fig. 3(b) is a graph explaining the function of the audio signal amount detecting unit 6c.

As shown in Fig. 3(a), the audio signal amount detecting unit 6c comprises a judging unit 6ca, a counter 6cb, and a shift register 6cc.

Here, the audio memory 6b having a predetermined storage capacity is buffered successively as audio signals Sau(1), Sau(2) - Sau(N) while at the same time performing the so-called FIFO processing, every time the decoding unit 6 generates an audio signal Sau.

Whenever the decoding unit 6 generates an audio signal Sau, a judging unit 6ca will perform a so-called FIFO processing, while at the same time successively buffering the bit error rates BER (1), BER(2) - BER(N) of various audio signals Sau (1), Sau(2) - Sau(N) stored in the audio memory 6b, and comparing various bit error rates BER(1), BER(2) - BER(N) with a predetermined judgment criterion value, thereby judging whether a reception state when Sau (2) - Sau (N) were generated is acceptable, thus outputting various judgment results JUG(1), JUG(2) - JUG(N).

Namely, when various bit error rates BER(1), BER(2) - BER(N) are found to be acceptable upon having been compared with a predetermined judgment criterion value, the judging unit 6ca will judge that a reception state at this time is acceptable, thereby outputting a judgment result which is logic "H". On the other hand, when various bit error rates are found to be worse upon having been compared with a predetermined judgment criterion value, the judging unit 6ca will judge that a reception state at this time is unacceptable, thereby outputting a judgment result which is logic "L".

Whenever the decoding unit 6 generates an audio signal Sau, the judging unit 6ca will count the number of the judgment results which are logic "H", among various judgment results JUG (1), JUG (2) - JUG (N) outputted from the judging unit 6ca. Therefore, a counted value σ is outputted which indicates the number of audio signals having an acceptable reception state, among audio signals Sau (1), Sau (2) - Sau(N).

Further, whenever the decoding unit 6 generates an audio signal Sau, a shift register 6cc will receive a counted value σ, continuously hold and then update counted values σ1 - σm of a predetermined number m from the past to the present, thereby outputting m counted values σ1 - σm as internal state signals Ddet3.

Therefore, as shown in Fig. 3(b), whenever the decoding unit 6 generates an audio signal Sau, the shift register 6cc will output the counted values σ1 - σm of a predetermined number m (in other words, during a predetermined time T) from the past to the present, as internal state signals Ddet3 indicating a history of an amount change of an audio signal having an acceptable reception state.

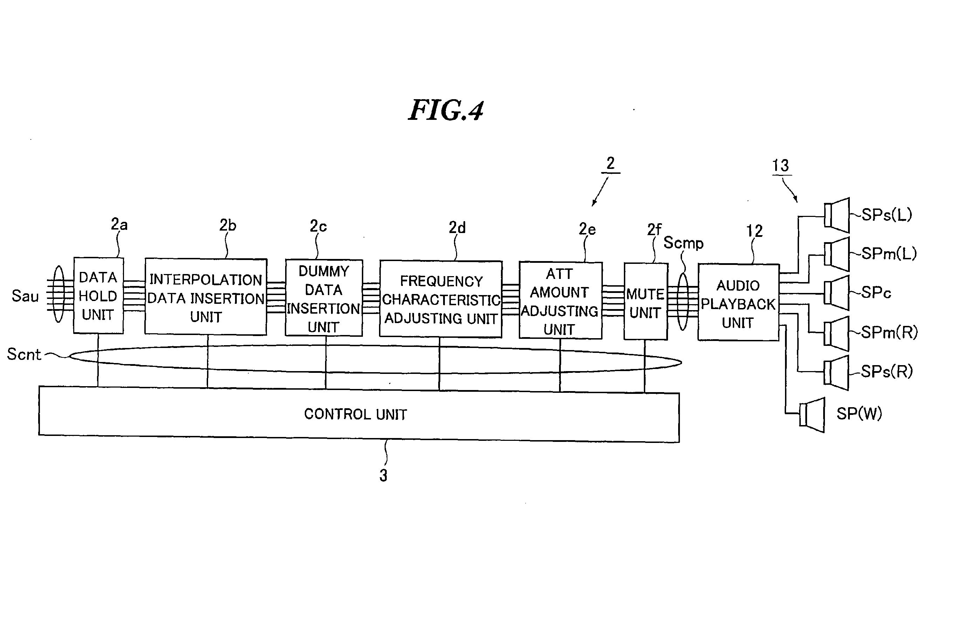

Next, as shown in the block diagram of Fig. 4, the audio processing unit 2 comprises a subordinately connected data hold unit 2a, an interpolation data insertion unit 2b, a dummy data insertion unit 2c, a frequency characteristic adjusting unit 2d, an ATT amount adjusting unit 2e, and a mute unit 2f. Each of the units 2a-2f processes the audio signal Sau in accordance with the control signal Scnt supplied from the control unit 3, thereby outputting a corrected audio signal Scmp. Further, the respective units 2a-2f operate individually in accordance with the control signal Scnt, thereby effecting a selective signal processing on the audio signal Scmp. Moreover, as shown in the diagram, when an audio signal Sau is supplied through two or more channels corresponding to a multi-channel speaker system comprising a center speaker SPc, main speakers SPm (L) and SPm (R) of left and right channels, surround speakers SPs(L) and SPs(R) of left and right channels, and a sub-woofer speak SP(W), it is possible to perform a signal processing in each channel in accordance with a control signal Scnt.

Here, the data holding unit 2a operates in accordance with the control signal Scnt to repeat an audio signal Sau of a predetermined period, thereby interpolating a signal component which is missing from the audio signal Sau.

The interpolation data insertion unit 2b performs an interpolation processing which interpolates a signal component missing from the audio signal Sau, in accordance with the control signal Scnt.

The dummy data insertion unit 2c operates in accordance with the control signal Scnt, to insert into the audio signal Sau a dummy data component for reproducing a sound which is not a jarring sound, at a time when an audio playback is performed through a speaker.

The frequency characteristic adjustment unit 2d has a variable filter and operates in accordance with the control signal Scnt to change a pass frequency band, a gain, and a phase characteristic, thereby adjusting a frequency characteristic of an audio signal Sau.

The ATT amount adjusting unit 2e operates in accordance with the control signal Scnt to adjust an attenuation amount, thereby variably adjusting a level of the audio signal Sau.

The mute unit 2f also operates in accordance with the control signal Scnt to shut down (mute on) the output of the audio signal Sau, thereby stopping the supply of the audio signal Scmp to the audio playback unit 12.

The control unit 3 is in the form of a circuit containing a microprocessor (MPU) or the like and having an operational function as well as a control function, and connected to an operating unit 14 which allows a user to specify a desired broadcast station or to issue an instruction to perform an audio playback based on a multi-channel speaker system.

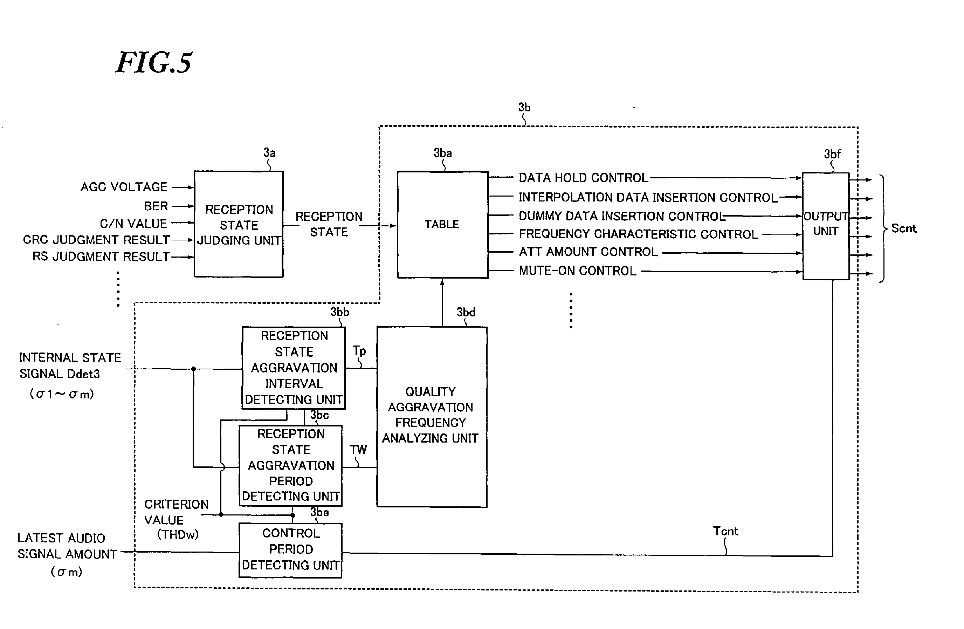

Furthermore, the control unit 3 has the same structure as the reception state judging unit 3a and the processing contents determining unit 3b shown in Fig. 1 (b). In more detail, the control unit 3 has a structure shown in the block diagram of Fig. 5.

That is, the control unit 3 has a reception state judging unit 3a for judging a reception state in accordance with internal state signals Ddet1 and Ddet2, i.e., an AGC voltage and a bit error rate (BER) or the like supplied from the AGC unit 8 and the demodulator 5. The control unit 3 also has a processing contents determining unit 3b. The processing contents determining unit 3b comprises: a storage unit (hereinafter, referred to as "table") 3ba in the form of a look-up table; a reception state aggravation interval detecting unit 3bb; a reception state aggravation period detecting unit 3bc; a reception state aggravation frequency analyzing unit 3bd; a control period detecting unit 3be; and an output unit 3bf.

The reception state aggravation period detecting unit 3bc operates to compare the counted values σ1 - σm supplied as internal state signals Ddet3 within a predetermined period T with a predetermined criterion value THDw, thereby detecting a period Tw within which a reception state has become worse(hereinafter, referred to as a "reception state aggravation period").

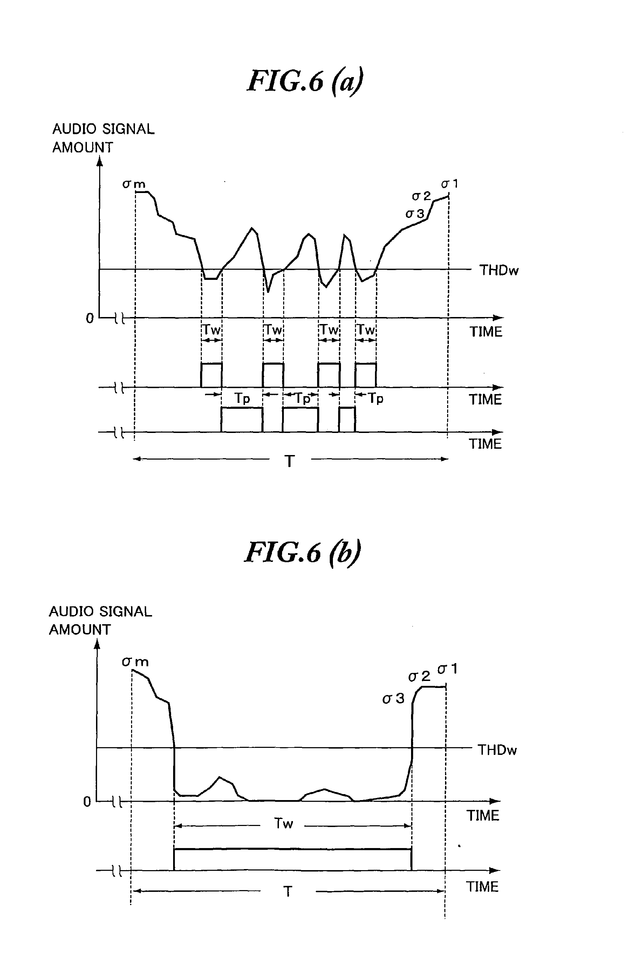

Next, a principle of detecting a reception state aggravation period Tw may be described as follows with reference to Fig. 6(a) showing a distribution of the counted values σ1 - σm supplied within a predetermined period T. Namely, since various counted values σ1 - σm are parameters each showing an amount of an audio signal of a time when a reception state buffered by an audio memory 6b is acceptable, a larger counted value means a better reception state while a smaller counted value means a worse reception state.

Then, the reception state aggravation period detecting unit 3bc compares a distribution of the counted values σ1 - σm with the predetermined criterion value THDw, thereby detecting a period smaller than the predetermined criterion value THDw, as a reception state aggravation period Tw.

In a case where a reception state has become worse because of multi-pass fading, since a distribution of the counted values σ1 - σm increases and decreases within a narrow time period as shown in Fig. 6 (a), it is possible to detect a reception state aggravation period Tw having a narrow time width by comparing the counted values with the predetermined criterion value THDw.

Moreover, when a reception state is such that a field intensity is weak, a distribution of the counted values σ1 - σm will decrease during a long time period, thereby detecting a reception state aggravation period Tw having a long time width by comparing the counted values with the predetermined criterion value THDw.

In this way, by comparing a distribution of the counted values σ1 - om with the criterion value THDw, the reception state aggravation period detecting unit 3bc can detect periods during which the reception states have become worse, as reception state aggravation periods Tw, as well as reasons responsible for them.

Next, the reception state aggravation interval detecting unit 3bb compares the distribution of the counted values σ1 - σm within a predetermined period T with the criterion value THDw, thereby detecting, as reception state aggravation intervals Tp, periods during which a distribution of the counted values σ1 - σm is larger than the criterion value THDw, i.e., periods which are contained between reception state aggravation periods Tw.

Next, the reception state aggravation frequency analyzing unit 3bd analyzes reception state aggravation intervals Tp outputted from the reception state aggravation interval detecting unit 3bb and the reception state aggravation period detecting unit 3bc, as well as the respective time widths and generation frequencies of the reception state aggravation periods Tw or the like, thereby detecting an occurring state of the foregoing multi-pass fading and the feature of each reception state in which a field intensity becomes weak, and supplying the detection results to the table 3ba.

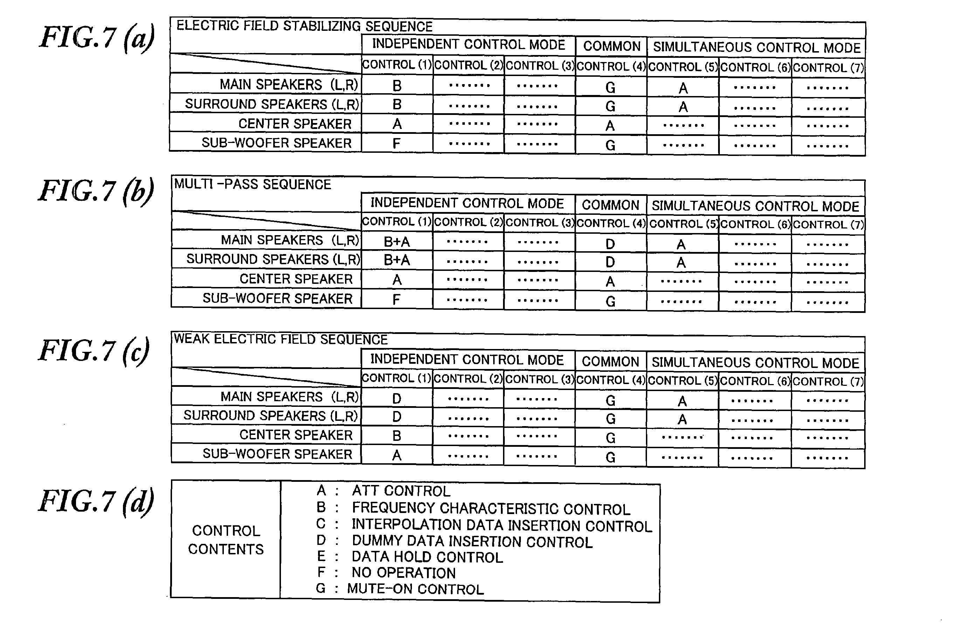

As schematically shown in the respective columns of controls (1) - (7) of Figs. 7(a) - (c), various control data causing the audio processing unit 2 to perform signal processing, along with the control contents shown in Fig. 7(d), are stored in advance in the table 3ba, corresponding to various information including the detection results supplied from the reception state aggravation frequency analyzing unit 3bd as well as the reception states supplied from the reception state judgment unit 3a. Here, although not all the control data are shown in the respective columns of controls (1) - (7) of Figs. 7 (a) - (c) for the sake of an easy description, control data incorporating the respective control contents shown in Fig. 7 (d) are actually stored in advance in the respective columns of controls (1) - (7).

Then, once there is a supply of various information including the detection result supplied from the reception state aggravation frequency analyzing unit 3bd as well as the reception state supplied from the reception state judgment unit 3a, control data corresponding to various information are selected and outputted to the output unit 3bf.

Namely, once the table 3ba receives information from the reception state judgment unit 3a, indicating a decrease of a reception field intensity or a stable reception state free from a multi-pass fading or the like, as well as information from the reception state aggravation frequency analyzing unit 3bd, indicating a detection result, there will be an output of control data in relation to an electric field stabilizing sequence shown in Figs. 7(a) and 7(d).

Moreover, once there is a supply of information from the reception state judgment unit 3a, indicating a reception state having been affected by a multi-pass fading or the like, as well as information from the reception state aggravation frequency analyzing unit 3bd, indicating a detection result, there will be an output of control data in relation to a multi-pass sequence shown in Figs. 7(b) and 7 (d) .

Further, once there is a supply of information from the reception state judgment unit 3a, indicating a reception state in which a reception field intensity has decreased, as well as information from the reception state aggravation frequency analyzing unit 3bd, indicating a detection result, there will be an output of control data in relation to a weak electric field sequence shown in Figs. 7(c) and 7(d).

A control period detecting unit 3be compares the latest counted value (namely, the latest audio signal amount) σm supplied to the shift register 6cc shown in Fig. 3(a) with the criterion value THDw, and supplies to the output unit 3bf, as a control period Tcnt, a period during which a counted value σm becomes smaller than the criterion value THDw. In this way, by comparing the latest counted value σm with the criterion value THDw, it is possible to detect in a real time and as a control period Tcnt, a period during which the foregoing multi-pass fading occurs and a period indicating a reception state having a week field intensity.

During a period specified by the control period Tcnt, the output unit 3df transmits various control data outputted from the table 3ba, as control signals Scnt, to the audio processing unit 2, thereby effecting a signal processing in accordance with the control signal Scnt, so as to process the audio signal Sau outputted from the audio memory 6b of the decoding unit 6.

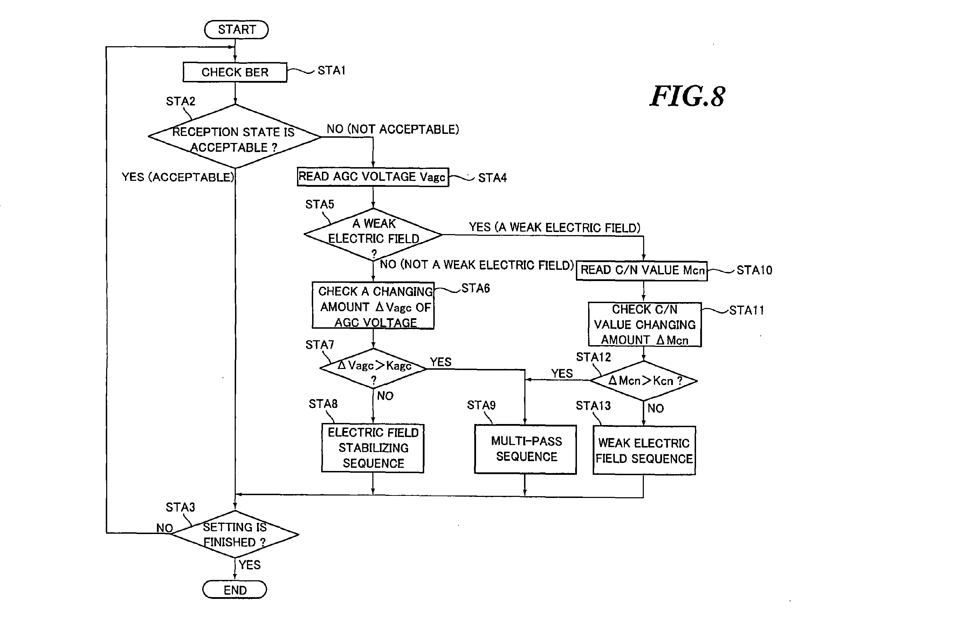

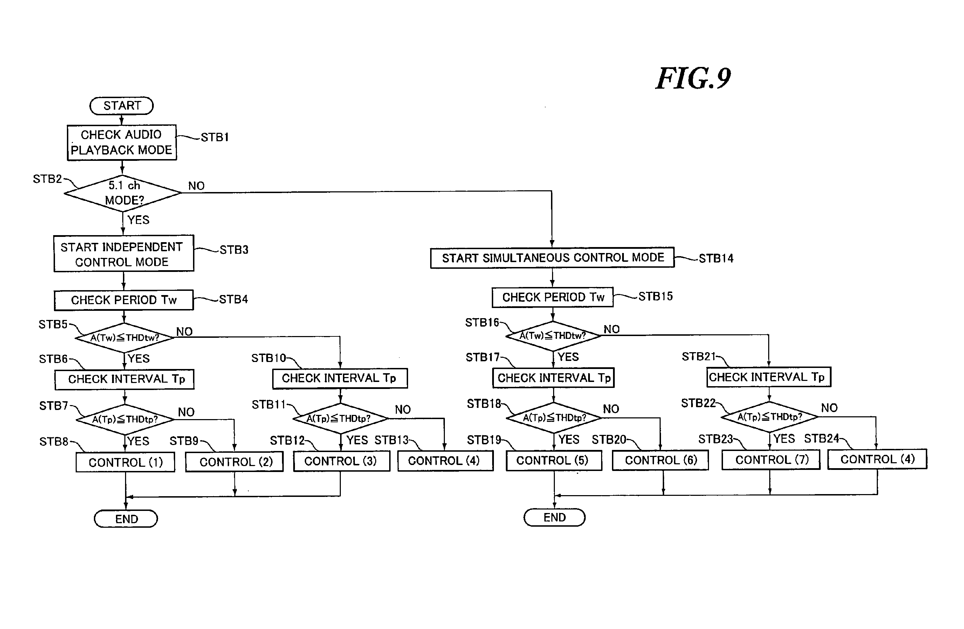

Next, description will be given to explain an example of an operation of the audio signal processing apparatus 1 having the above-described structure, with reference to flow charts shown in Figs. 8 and 9. However, Figs. 8 and 9 are provided only to show the operations of the audio signal processing unit 2 and the control unit 3.

At first, in order to make the operation of the audio signal processing apparatus 1 easy to understand, description will be given to explain the composition of the flow charts shown in Figs. 8 and 9.

Fig. 8 shows a so-called main routine, while Fig. 9 shows a so-called sub-routine. Once the audio signal processing apparatus 1 starts its operation, the receiving unit Rx receives a broadcast or the like, and performs a demodulation and a decoding processing, while the audio signal processing unit 2 and the control unit 3 start to operate in accordance with the flow chart shown in Fig. 8.

In carrying out an "electric field stabilizing sequence" shown in step STA8, a "multi-pass sequence" shown in step STA 9, and a "weak electric field sequence" shown in step STA 13, some related operations will be performed in accordance with the flow chart shown in Fig. 9. Once these operations are over, the process will return back to the processing of step STA 3 shown in Fig. 8, thereby continuing the process.

When performing an operation in accordance with the flow chart shown in Fig. 9, i.e., when performing a processing in relation to the "electric field stabilizing sequence" shown in step STA8 of Fig. 8, the audio processing unit 2 will start its processing in accordance with the contents of the control data show in Figs. 7 (a) and 7 (d). On the other hand, when performing a processing in relation to the "multi-pass sequence" shown in step STA 9, the audio processing unit 2 will start its processing in accordance with the contents of the control data show in Figs. 7 (b) and 7 (d). Further, when performing a processing in relation to the "weak electric field sequence" shown in step STA 13, the audio processing unit 2 will start its processing in accordance with the contents of the control data show in Figs. 7(c) and 7(d).

Next, description will be given to explain an operation of the audio signal processing apparatus 1 with reference to the flow charts of Figs. 8 and 9.

Once the audio signal processing apparatus 1 starts its operation, the control unit 3 will operate at step STA 1 shown in Fig. 8 to check a bit error rate (BER) in accordance with an internal state signal Ddet2. Then, at step STA2, the control unit 3 will check whether the current reception state is acceptable in accordance with the bit error rate. If an answer is yes, the process proceeds to step STA3. Then, as in a case where the power supply has been made OFF by a user, if the audio signal processing apparatus 1 has already been set, the operation will be terminated. On the other hand, if the audio signal processing apparatus 1 has not yet been set, the process from step STA1 will be repeated. In this way, it is possible to judge whether the current reception state is acceptable, using for example a comparison result obtained through a comparison between a current value of bit error rate and a predetermined value.

On the other hand, if the control unit 3 judges at step STA2 that a reception state is not acceptable, the process will proceed to step STA4 to read an AGC voltage Vagc in accordance with an internal state signal Ddet1. Then, at step STA5, it is judged whether a current reception state is a weak electric field state in accordance with the AGC voltage Vagc. If it is judged that a current reception state is not a weak electric field state, the process will proceed to step ST6. On the other hand, if it is judged that the current reception state is a weak electric field state, the process will proceed to step ST10. In this way, it is possible to judge whether the current reception state is a weak electric field state, using a comparison result obtained through a comparison between the current AGC voltage Vagc and a predetermined value.

At a step STA6, the control unit 3 will check a changing amount ΔVagc of the AGC voltage Vagc per predetermined time. Then, the process will proceed to step STA7 to judge if a changing amount ΔVagc is larger than a predetermined value Kagc. If it is judged at step STA7 that a changing amount ΔVagc is smaller than a predetermined value Kagc, it will be determined that a reception electric field is in a stabilized state and the process will proceed to step STA8 to start a processing shown in Fig. 9 in relation to the "electric field stabilizing sequence".

On the other hand, if it is judged at step STA7 that a changing amount ΔVagc is larger than a predetermined value Kagc, it will be determined that a current reception state has already been influenced by a multi-pass fading or the like, so that the process will proceed to step STA9 to start a processing shown in Fig. 9 in relation to the "multi-pass sequence".

Once the process proceeds to step STA10, the control unit 3 will read a C/N value Mcn in accordance with the internal state signal Sdet2. Then, at step STA11, the control unit 3 checks a changing amount ΔMcn of C/N value Mcn per predetermined time and the process proceeds to step STA12. Subsequently, it is judged at step STA12 whether a changing amount ΔMcn is larger than a predetermined value Kcn. If it is judged that a changing amount ΔMcn is larger than a predetermined value Kcn, it will be determined that a current reception state has already been influenced by a multi-pass fading or the like, so that the process will proceed to step STA9 to start a processing shown in Fig. 9 in relation to the "multi-pass sequence".

On the other hand, if it is judged at step STA12 that a changing amount ΔMcn is smaller than a predetermined value Kcn, it will be determined that a current reception state is a weak electric field state and the process will proceed to step STA13 to start a processing shown in Fig. 9 in relation to the "weak electric field sequence".

In this way, the audio signal processing apparatus 1, by performing a processing shown in Fig. 8, judges a reception state in accordance with an internal state of the receiving unit Rx. If it is found not necessary to perform a signal processing on an audio signal Sa, the control unit 3 will not perform any control so as to maintain the audio processing unit 2 at its present state, thereby repeating the steps STA1 - STA3. On the other hand, if the control unit 3 judges at step STA2 that a reception state is not acceptable, the process will start any one of steps STA8, STA9, and STA13.

Next, description will be given to explain an operation of the "electric field stabilizing sequence" at step STA8 shown in Fig. 8, with reference to Fig. 9.

Upon starting an operation of the "electric field stabilizing sequence", the control unit 3 will at first check at step STB1 shown in Fig. 9 an audio playback mode specified by a user. Then, at step STB2, once the control unit 3 specifies an audio playback mode (for example, 5.1-channel surround mode) for independently controlling in each channel an audio signal supplied to each speaker of a multi-channel speaker system, an operation of an "independent control mode" of step STB3 will be started. On the other hand, once an audio playback mode is specified for performing the same control on audio signals of all channels, an operation of "simultaneous control mode" of step STB14 will be started.

Upon starting an operation of the "independent control mode" of step STB3, the audio processing unit 2 will perform a changeover to independently process in each channel an audio signal Sau in accordance with an instruction from the control unit 3.

Next, at step STB4, the reception state aggravation period detecting unit 3bc of the control unit 3 checks a reception state aggravation period Tw. Then, at step STB5, the reception state aggravation frequency analyzing unit 3bd compares a time-average value A(Tw) which is a reception state aggravation period Tw per time unit, with a predetermined value THDtw, thereby analyzing a time width of each reception state aggravation period Tw.

Namely, as shown in Fig. 6(a), when four reception state aggravation periods Tw have occurred, a total of these reception state aggravation periods Tw is divided by 4. In this way, a time-average value A(Tw) can be calculated and compared with the predetermined value THDtw.

If a time-average value A (Tw) is smaller than the predetermined value THDtw, it will be judged that a reception state aggravation period is short and the process proceeds to step STB6. On the other hand, if a time-average value A (Tw) is larger than the predetermined value THDtw, it will be judged that a reception state aggravation period is long and the process proceeds to step STB10.

At step STB6, the reception state aggravation interval detecting unit 3bb checks the reception state aggravation interval Tp. Then, at step STB7, the reception state aggravation frequency analyzing unit 3bd compares a time-average value A(Tp) which is a reception state aggravation interval Tp per interval unit, with a predetermined value THDtp, thereby analyzing a time width of each reception state aggravation interval Tp.

Namely, as shown in Fig. 6(a), when three reception state aggravation intervals Tp have occurred, a total of these reception state aggravation intervals Tp is divided by 3. In this way, a time-average value A(Tp) can be calculated and compared with the predetermined value THDtp.

If a time-average value A (Tp) is smaller than a predetermined value THDtp, the process will proceed to step STB8. On the other hand, if a time-average value A(Tp) is larger than a predetermined value THDtp, the process will proceed to step STB9.

In this way, the control unit 3, by performing a judgment processing at steps STB4 - STB7, analyzes mutual features between the reception state aggravation periods Tw and the reception state aggravation intervals Tp, thereby performing a processing of step STB8 or step STB9 in response to the analyzed features.

Upon shifting from step STB5 to step STB10, the reception state aggravation interval detecting unit 3bb checks the reception state aggravation intervals Tp. Then, at step STB11, the reception state aggravation frequency analyzing unit 3bd compares a time-average value which is a reception state aggravation interval Tp per unit interval, with the predetermined value THDtp, thereby analyzing a time width of each reception state aggravation interval Tp. If the time-average value A (Tp) is smaller than the predetermined value THDtp, the process proceeds to step STB12. On the other hand, if the time-average value A(Tp) is larger than the predetermined value THDtp, the process proceeds to step STB13.

In this way, the control unit 3, by performing processing at steps STB4, STB5, STB10, and STB11, analyzes mutual features between the reception state aggravation periods Tw and the reception state aggravation intervals Tp, thereby performing a processing of step STB12 or step STB13 in response to the analyzed features.

Next, upon shifting to step STB8, the control unit 3 causes the audio processing unit 2 to perform a processing during the control period Tcnt in accordance with the control data of control (1) in the "independent control mode" of the "electric field stabilizing sequence" shown in Figs. 7(a) and 7(d).

Further, upon shifting to step STB9, the control unit 3 causes the audio processing unit 2 to perform a processing during the control period Tcnt in accordance with the control data of control (2) in the "independent control mode" of the "electric field stabilizing sequence" shown in Figs. 7(a) and 7(d).

Moreover, upon shifting to step STB12, the control unit 3 causes the audio processing unit 2 to perform a processing during the control period Tcnt in accordance with the control data of control (3) in the "independent control mode" of the "electric field stabilizing sequence" shown in Figs. 7(a) and 7(d).

In addition, upon shifting to step STB13, the control unit 3 causes the audio processing unit 2 to perform a processing during the control period Tcnt in accordance with the control data of control (4) in the "common" of the "electric field stabilizing sequence" shown in Figs. 7(a) and 7(d).

Upon finishing a processing of any one of steps STB8, STB9, STB12 and STB13, the process proceeds to step STA3 shown in Fig. 8.

Next, description will be given to a case where an operation of "simultaneous control mode" of step STB14 has been started.

If the operation of the "simultaneous control mode" is started, the audio processing unit 2 will perform a changeover to independently process in each channel an audio signal in accordance with an instruction from the control unit 3.

Then, at steps STB15-STB18, STB21 and STB22, similar to the above-mentioned steps STB4-STB7, the control unit 3 performs a judgment based on the reception state aggravation period Tw and the reception state aggravation interval Tp. Subsequently, the process proceeds to any one of steps STB19, STB20, STB23, and STB24.

Next, upon shifting to step STB19, the control unit 3 causes the audio processing unit 2 to perform a processing during the control period Tcnt in accordance with the control data of control (5) in the "simultaneous control mode" of the "electric field stabilizing sequence" shown in Figs. 7(a) and 7(d).

Moreover, upon shifting to step STB20, the control unit 3 causes the audio processing unit 2 to perform a processing during the control period Tcnt in accordance with the control data of control (6) in the "simultaneous control mode" of the "electric field stabilizing sequence" shown in Figs. 7(a) and 7(d).

Further, upon shifting to step STB23, the control unit 3 causes the audio processing unit 2 to perform a processing during the control period Tcnt in accordance with the control data of control (7) in the "simultaneous control mode" of the "electric field stabilizing sequence" shown in Figs. 7(a) and 7(d).

In addition, upon shifting to step STB24, the control unit 3 causes the audio processing unit 2 to perform a processing during the control period Tcnt in accordance with the control data of control (4) in the "common" of the "electric field stabilizing sequence" shown in Figs. 7(a) and 7(d).

Then, upon finishing any one of steps STB19, STB20, STB23 and STB24, the process proceeds to step STA3 shown in Fig. 8.

Next, description will be given to explain an operation of the "multi-pass sequence" of step STA9 shown in Fig. 8.

Once an operation of "multi-pass sequence" is started, the control unit 3 performs a processing from step STB1 shown in Fig. 9, and performs, in the same manner as the above-mentioned "electric field stabilizing sequence", a judgment based on reception state aggravation period Tw and reception state aggravation interval Tp, followed by performing a processing of any one of steps STB8, STB9, STB12, STB13 STB19, STB20, STB23, and STB24.

After having shifted to step STB8, the control unit 3 causes the audio processing unit 2 to perform a processing during the control period Tcnt in accordance with the control data of control (1) in the "independent control mode" of the "multi-pass sequence" shown in Figs. 7 (b) and 7 (d) . After having shifted to step STB9, the control unit 3 causes the audio processing unit 2 to perform a processing during the control period Tcnt in accordance with the control data of control (2) in the "independent control mode" of the "multi-pass sequence" shown in Figs. 7(b) and 7(d). After having shifted to step STB12, the control unit 3 causes the audio processing unit 2 to perform a processing during the control period Tcnt in accordance with the control data of control (3) in the "independent control mode" of the "multi-pass sequence" shown in Figs. 7(b) and 7(d). After having shifted to step STB13, the control unit 3 causes the audio processing unit 2 to perform a processing during the control period Tcnt in accordance with the control data of control (4) in the "common" of the "multi-pass sequence" shown in Figs. 7(b) and 7(d).

Moreover, after having shifted to step STB19, the control unit 3 causes the audio processing unit 2 to perform a processing during the control period Tcnt in accordance with the control data of control (5) in the "simultaneous control mode" of the "multi-pass sequence" shown in Figs. 7 (b) and 7 (d). After having shifted to step STB20, the control unit 3 causes the audio processing unit 2 to perform a processing during the control period Tcnt in accordance with the control data of control (6) in the "simultaneous control mode" of the "multi-pass sequence" shown in Figs. 7 (b) and 7 (d). After having shifted to step STB23, the control unit 3 causes the audio processing unit 2 to perform a processing during the control period Tcnt in accordance with the control data of control (7) in the "simultaneous control mode" of the "multi-pass sequence" shown in Figs. 7 (b) and 7 (d) . After having shifted to step STB24, the control unit 3 causes the audio processing unit 2 to perform a processing during the control period Tcnt in accordance with the control data of control (4) in the "common" of the "multi-pass sequence" shown in Figs. 7(b) and 7(d).

Then, upon finishing a processing of any one of steps STB19, STB20, STB23 and STB24, the process proceeds to step STA3 shown in Fig. 8.

Next, description will be given to explain an operation of the "weak electric field sequence" of step STA13 shown in Fig. 8.

Once an operation of "weak electric field sequence" is started, the control unit 3 performs a processing from step STB1 shown in Fig. 9, and performs, in the same manner as the above-mentioned "electric field stabilizing sequence" and "multi-pass sequence", a judgment based on reception state aggravation period Tw and reception state aggravation interval Tp, followed by performing a processing of any one of steps STB8, STB9, STB12, STB13 STB19, STB20, STB23, and STB24.

After having shifted to step STB8, the control unit 3 causes the audio processing unit 2 to perform a processing during the control period Tcnt in accordance with the control data of control (1) in the "independent control mode" of the "weak field intensity sequence" shown in Figs. 7(c) and 7(d). After having shifted to step STB9, the control unit 3 causes the audio processing unit 2 to perform a processing during the control period Tcnt in accordance with the control data of control (2) in the "independent control mode" of the "weak field intensity sequence" shown in Figs. 7 (c) and 7(d). After having shifted to step STB12, the control unit 3 causes the audio processing unit 2 to perform a processing during the control period Tcnt in accordance with the control data of control (3) in the "independent control mode" of the "weak field intensity sequence" shown in Figs. 7(c) and 7(d). After having shifted to step STB13, the control unit 3 causes the audio processing unit 2 to perform a processing during the control period Tcnt in accordance with the control data of control (4) in the "common" of the "weak field intensity sequence" shown in Figs. 7(c) and 7(d).

After having shifted to step STB19, the control unit 3 causes the audio processing unit 2 to perform a processing during the control period Tcnt in accordance with the control data of control (5) in the "simultaneous control mode" of the "weak field intensity sequence" shown in Figs. 7(c) and 7(d). After having shifted to step STB20, the control unit 3 causes the audio processing unit 2 to perform a processing during the control period Tcnt in accordance with the control data of control (6) in the "simultaneous control mode" of the "weak field intensity sequence" shown in Figs. 7 (c) and 7(d). After having shifted to step STB23, the control unit 3 causes the audio processing unit 2 to perform a processing during the control period Tcnt in accordance with the control data of control (7) in the "simultaneous control mode" of the "weak field intensity sequence" shown in Figs. 7(c) and 7(d). After having shifted to step STB24, the control unit 3 causes the audio processing unit 2 to perform a processing during the control period Tcnt in accordance with the control data of control (4) in the "common" of the "weak field intensity sequence" shown in Figs. 7(b) and 7(d).

Upon finishing any one of steps STB8, STB9, STB12 STB13, STB19, STB20, STB23, and STB24, the process proceeds to step STA3 shown in Fig. 8.

As described above, according to the audio signal processing apparatus 1 of the present embodiment, it is possible to highly accurately judge a reception state by detecting a reception state in accordance with a plurality of internal states in the receiving unit Rx. Further, by performing a processing for playing back a high quality sound using a speaker or the like to process an audio signal Sau outputted from the receiving unit Rx in response to a judged reception state, it is possible to play back a sound using a speaker or the like without bringing about any incongruity to a user, even if a reception state has become worse.

Moreover, since the control unit 3 judges whether a reception state is acceptable or not in accordance with an AGC voltage supplied to the front end unit 4 which performs a high-speed processing, it is possible to perform a quick processing for determining processing contents for controlling the audio processing unit 2, thereby making it possible to prevent a problem of a delayed processing on the audio signal Sau.

Moreover, in a case where a user has specified an audio playback based on multi-channels, since the control unit 3 can perform a control on the audio processing unit 2 to finely process in each channel an audio signal Sau, it is possible to playback a high quality sound using a speaker or the like in response to a reception state.

In addition, regarding a digital receiving apparatus 1 of the present embodiment which has been described above, the audio processing unit 2, the control unit 3, and the decoding unit 6 shown in Fig. 2, can also be formed of a microprocessor (MPU) or a digital signal processor (DSP), so that it is possible to effect the same operations as the above-discussed audio processing unit 2, control unit 3 and decoding unit 6 by executing a computer program.

Besides, it is further possible to record the foregoing program in a recording medium such as CD and DVD, and install the same in the foregoing microprocessor or the like, thereby executing the program.

## Claims

1. An audio signal processing apparatus for processing an audio signal outputted from receiving means which is provided for receiving a signal transmitted hereto through a digital transmission route, said apparatus comprising:
audio processing means for processing said audio signal; and
control means for judging a reception state using a plurality of information indicating an internal state of said receiving means, and controlling signal processing contents to be executed by the audio processing means in accordance with a result of said judging.

2. The audio signal processing apparatus according to claim 1, wherein the audio processing means individually performs a signal processing on said audio signal in each channel.

3. The audio signal processing apparatus according to claim 1 or 2, wherein the control means judges a reception state using a bit error rate and an AGC voltage of said receiving means.

4. The audio signal processing apparatus according to claim 3, wherein when the control means has judged from said bit error rate that a reception state is not acceptable, said control means judges from a value of said AGC voltage whether a reception electric field is a weak electric field, thereby judging a reception state.

5. The audio signal processing apparatus according to claim 4, wherein when the control means has judged from a value of said AGC voltage that a reception electric field is not a weak electric field, said control means judges a reception state from a changing amount of said AGC voltage.

6. The audio signal processing apparatus according to claim 5, wherein when a changing amount of the AGC voltage is smaller than a predetermined value, the control means judges that a reception field has been stabilized, and controls said signal processing contents in response to a result of said judging.

7. The audio signal processing apparatus according to claim 5 or 6, wherein when a changing amount of the AGC voltage is larger than a predetermined value, the control means judges that there is not an influence from a multi-pass, and controls said signal processing contents in response to a result of said judging.

8. The audio signal processing apparatus according to any one of claims 4 to 7, wherein when the control means has judged from a value of said AGC voltage that a reception electric field is a weak electric field, said control means judges a reception state from a changing amount of C/N value of the receiving means.

9. The audio signal processing apparatus according to claim 8, wherein when a changing amount of C/N value is smaller than a predetermined value, the control means judges that a reception electric field is a weak electric field, and controls the signal processing contents in response to a result of said judging.

10. The audio signal processing apparatus according to claim 8 or 9, wherein when a changing amount of C/N value is larger than a predetermined value, the control means judges that there is not an influence from a multi-pass, and controls the signal processing contents in response to a result of said judging.

11. The audio signal processing apparatus according to any one of claims 1, 2, 4, 5, 6, 8, and 9, wherein said control means controls the signal processing contents in response to said reception state and a change of an amount of an audio signal outputted from said receiving means.

12. The audio signal processing apparatus according to claim 11, wherein information in relation to a change of said audio signal includes an aggravation period in which an audio signal amount is lower than a threshold and an aggravation interval which is an interval of the aggravation period.

13. An audio signal processing method for processing an audio signal outputted from receiving means which is provided for receiving a signal transmitted hereto through a digital transmission route, said method comprising:
a reception state judging step for judging a reception state using a plurality of information indicating internal state of said receiving means;
a processing contents setting step for setting processing contents of said audio signal in accordance with a judgment result based on said reception state judging step; and
a signal processing step for processing said audio signal in accordance with said processing contents set by said processing contents setting step.

14. A computer program for a computer to execute, which computer is provided for processing an audio signal outputted from receiving means provided for receiving a signal transmitted hereto through a digital transmission route, said program comprising:
a reception state judging step for judging a reception state using a plurality of information indicating internal state of said receiving means;
a processing contents setting step for setting processing contents of said audio signal in accordance with a judgment result based on said reception state judging step; and
a signal processing step for processing said audio signal in accordance with said processing contents set by said processing contents setting step.

15. A recording medium having recorded therein a computer program recited in claim 14.
